# EUROPEAN PATENT SPECIFICATION

(11) **EP 1 125 418 B1**
(45) Date of publication and mention of the grant of the patent: **18.04.2007**
(21) Application number: 99971184.9
(22) Date of filing: 26.10.1999
(51) Int. Cl.: H04L 29/06, H04L 29/12, H04Q 7/22, H04Q 7/32

(54) **A MOBILE TERMINAL AND WIRELESS DEVICE WITH COMMON IP ADDRESS**
MOBILENDGERÄT UND DRAHTLOSES GERÄT MIT GEMEINSAMER IP-ADRESSE
TERMINAL MOBILE ET DISPOSITIF SANS FIL AYANT UNE ADRESSE IP COMMUNE

(30) Priority: 26.10.1998 US 179226
(43) Date of publication of application: 22.08.2001
(73) Proprietor: QUALCOMM INCORPORATED, San Diego, CA 92121-1714 (US)
(72) Inventor: LIOY, Marcello, San Diego, CA 92122 (US)
(74) Representative: Walsh, Michael Joseph
(86) International application number: PCT/US1999/025145
(87) International publication number: WO 2000/025497

(56) References cited:
- US-A- 5 708 655
- YEOM H Y ET AL: "IP MULTIPLEXING BY TRANSPARENT PORT-ADDRESS TRANSLATOR" PROCEEDINGS OF THE SYSTEMS ADMINISTRATION CONFERENCE. LISA,XX,XX, 29 September 1996 (1996-09-29), pages 113-121, XP002046289

## Description

### BACKGROUND OF THE INVENTION

### I. Field of the Invention

The present invention relates to wireless data services. More particularly, the present invention relates to a novel and improved method and system for shifting Internet Protocol (IP) endpoints between devices attached to a network.

### II. Description of Related Art

Internetworking, i.e., the connection of individual local area networks (LANs), has rapidly become very popular. The infrastructure and associated protocols commonly referred to as the "Internet" have become well known and widely used. At the heart of the Internet is the Internet Protocol (IP) which supports the routing of datagrams between the LANs as is well known in the art, and further described in Request For Comment (RFC) 791 entitled, "INTERNET PROTOCOL DARPA INTERNET PROGRAM PROTOCOL SPECIFICATION," dated September 1981.

IP is a datagram-oriented protocol which provides several services, including addressing. The IP protocol encapsulates data into an IP packet for transmission, and affixes addressing information to the header of the packet. IP headers contain 32-bit addresses that identify the sending and receiving hosts. These addresses are used by intermediate routers to select a path through the network for the packet towards its ultimate destination at the intended address. A basic concept of IP addressing is that initial prefixes of the IP address can be used for generalized routing decisions. For example, the first 16 bits of an address might identify QUALCOMM Incorporated, the first 20 bits identify the QUALCOMM's main office, the first 26 bits identify a particular Ethernet in that office, and the entire 32 bits identify a particular host on that Ethernet. As a further example, every address in QUALCOMM's IP network might be of the form (in "dotted-quad notation"): 129.46.xxx.xxx, where "xxx" refers to any allowable integer between zero and 255.

As is evident by this prefix-based routing characteristic of IP, the IP addresses contain implied geographical information about the location of a particular host on the Internet. In other words, whenever any router on the Internet receives a packet having a destination IP address that begins "129.46" the router forwards that packet in a particular direction towards the QUALCOMM Incorporated network in San Diego, California, USA. Thus, the IP protocol allows datagrams originating at any Internet node in the world to be routed to any other Internet node in the world, given that the originating party knows the IP address of the destination party.

As mobile computing and mobile Internet access have grown in popularity, a need has arisen to provide mobile data support for mobile terminals such as laptop or palmtop computers using the IP protocol. However, as just mentioned, the IP addressing scheme used for Internet routing contains implied geographic information. In other words, if a user desires to use a fixed IP address to identify his mobile terminal, the IP packets intended for that mobile terminal will not be routed to that mobile terminal when it is away from its "home" network (i.e., the network which encompasses its fixed IP address) in the absence of some technique for "forwarding" IP packets to the mobile terminal.

For example, suppose a user decides to remove his mobile terminal from its "home" IP network at QUALCOMM Incorporated in San Diego, and take it with him on a trip to Palo Alto, California, and there connect to Stanford University's IP network while still keeping his QUALCOMM -assigned fixed IP address. Any IP datagram intended for the mobile terminal will still be routed to QUALCOMM's IP network because of the geographical location information implicit in the mobile terminal's fixed IP address. Such IP packets will not be delivered to the mobile terminal while away from its "home" network unless some mechanism is in place to forward IP packets from Qualcomm's IP network to the mobile terminal at its current point of attachment to the Internet at Stanford University's IP network in Palo Alto.

In order to meet this need, RFC 2002, entitled "IP Mobility Support," dated October 1996, specifies protocol enhancements that allow transparent routing of IP datagrams to mobile nodes in the Internet. Using the techniques described in RFC 2002, each mobile node may always be identified by its "home" IP address, regardless of its current point of attachment to the Internet. While situated away from its home IP network, a mobile terminal may become associated with a "care-of" address, thereby providing forwarding information necessary to route IP datagrams to its current point of attachment to the internet. RFC 2002 accomplishes this by providing for registration of the care-of address with a "home agent." This home agent forwards IP datagrams intended for the mobile terminal by using a technique called "IP tunneling." IP tunneling involves the home agent attaching a new IP header which contains the care-of address to any arriving IP packet which has a destination address corresponding to the mobile terminal's home IP address. After arriving at the care-of address, a "foreign agent" at the care-of address strips off the IP tunneling header, and delivers the IP packet to the mobile terminal at its current point of attachment to the Internet.

In this way, the techniques of RFC 2002 provide mobile data services for users who desire to relocate their mobile terminal's point of attachment to the internet without having to change the mobile terminal's IP address. This ability has several advantages. First, it allows originating nodes elsewhere on the Internet to send periodic "push" services to the mobile terminal regardless of where it is. Such services might include stock quotes or e-mail. This obviates the need for the mobile user to "dial in" or otherwise contact his home network in order to retrieve information. Furthermore, it allows the mobile terminal to relocate as often as desired, without any originating parties having to keep track of where the mobile terminal is currently located.

To increase the freedom of mobility of the mobile terminal, many mobile users will typically use wireless communication devices, such as cellular or portable phones, to connect to the Internet. In other words, many mobile users will use wireless communication devices, commonly referred to as "mobile stations," or MT2 devices, as the point of access to the land-based network. As used herein, "mobile station" or "MT2 device" will refer to any subscriber station in the public wireless radio network that is intended to be used while in motion or during halts at unspecified points. Mobile stations and MT2 devices include portable units (e.g., hand-held personal phones) and units installed in vehicles, as well as wireless local loop (WLL) telephones.

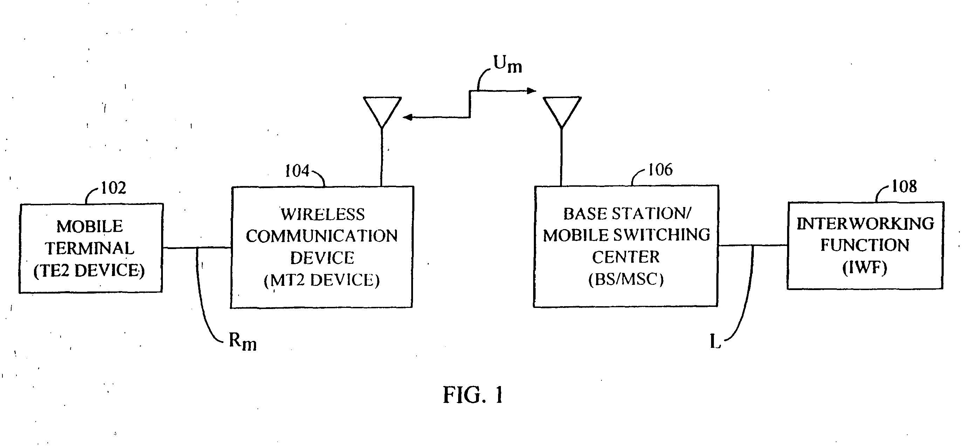

FIG. 1 illustrates a high-level block diagram of a wireless data communication system in which a mobile terminal (TE2 device) **102** communicates with an Interworking Function (IWF) **108** via a wireless communication system which includes wireless communication device (MT2 device) **104** and Base Station/Mobile Switching Center (BS/MSC) **106.** In FIG. 1, the IWF **108** serves as the access point to the Internet. IWF **108** is coupled to, and often co-located with BS/MSC **106,** which may be a conventional wireless base station as is known in the art. TE2 device **102** is coupled to MT2 device **104,** which is in turn in wireless communication with BS/MSC **106** and IWF **108.**

Many protocols exist which allow data communication between the TE2 device **102** and the IWF **108.** For example, Telecommunications Industry Association (TIA)/Electronics Industries Association (EIA) Interim Standard IS-707.5, entitled "Data Service Options for Wideband Spread Spectrum Systems: Packet Data Services," published February 1998, defines requirements for support of packet data transmission capability on TIA/EIA IS-95 wideband spread spectrum systems, of which BS/MSC **106** and IWF **108** may be a part. IS-707.5 specifies a packet data bearer service that may be used for communication between TE2 device **102** and IWF **108** via BS/MSC **106.** It provides procedures that can apply to multiple packet data services, including the Mobile IP service of RFC 2002, as well as Cellular Digital Packet Data (CDPD) which is described in CDPD-1995, entitled "Cellular Digital Packet Data System Specification, Version 1.1," published January 29, 1995 by the CDPD Forum, Inc.

CDPD is an AMPS (analog) cellular data service, which includes some of its own support for mobility. CDPD differs from Mobile IP in several significant ways. Most notably, a CDPD modem has an assigned IP address that belongs to the CDPD network. So although a CDPD modem may roam within the CDPD network, it may not use its IP address outside of the CDPD network in the same way that a Mobile IP supported terminal may use its "home" IP address outside of its "home" network.

IS-707.5 also provides the requirements for communication protocols on the links between TE2 device **102** and the MT2 device **104** (the Rₘ interface), between the MT2 device **104** and the BS/MSC **106** (the Uₘ interface), and between the BS/MSC **106** and the IWF **108** (the L interface).

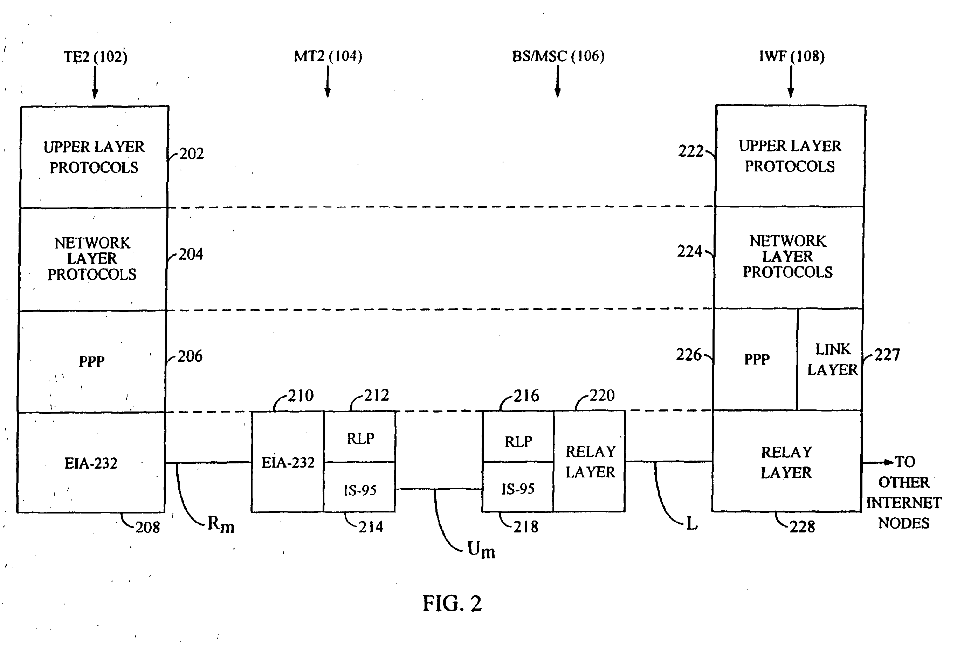

Referring now to FIG. 2, a diagram of the protocol stacks in each entity of the IS-707.5 Relay Model is shown. FIG. 2 corresponds roughly to Figure 1.4.2.1-1 of IS-707.5. At the far left of the figure is a protocol stack, shown in conventional vertical format, showing the protocol layers running on the TE2 device **102** (e.g., the mobile terminal, laptop or palmtop computer). The TE2 protocol stack is illustrated as being logically connected to the MT2 device **104** protocol stack over the Rₘ interface. The MT2-device **104,** is illustrated as being logically connected to the BS/MSC **106** protocol stack over the Um interface. The BS/MSC **106** protocol stack is, in turn, illustrated as being logically connected to the IWF **108** protocol stack over the L interface.

An example of the operation of FIG. 2 is as follows. An upper layer protocol **202** entity, such as an application program running on the TE2 device **102** has a need to send IP packets over the Internet. An example application may be a web browser such as Netscape Navigator, or Microsoft Internet Explorer, or the like. The web browser requests a Universal Resource Locator (URL), such as http://www.qualcomm.com. A Domain Name System (DNS) protocol, also in the upper layer protocols **202,** translates the textual host name "www.qualcomm.com" to a 32-bit numeric IP address. The Hypertext Transfer Protocol (HTTP), also an upper layer protocol **202,** constructs a GET message for the requested URL, and also specifies that Transmission Control Protocol (TCP) will be used to send the message and that TCP port 80 is used for HTTP operations.

The TCP protocol, also an upper layer protocol **202,** opens a connection to the IP address specified by DNS, port 80, and transmits the HTTP GET message. The TCP protocol specifies that the IP protocol will be used for message transport. The IP protocol, a network layer protocol **204,** transmits the TCP packets to the IP address specified. The Point to Point Protocol (PPP), a link layer protocol **206,** encodes the IP/TCP/HTTP packets and transmits them across the Rₘ interface using the relay layer protocol **208** EIA-232 to the EIA-232-compatible port on the MT2 device. The PPP protocol is described in detail in RFC 1661, entitled "The Point-to-Point Protocol (PPP)."

The EIA-232 protocol **210** on the MT2 device **104,** passes the transmitted PPP packet to a combination of the Radio Link Protocol (RLP) **212** and IS-95 protocol **214** for transmission to the BS/MSC **106** over the Uₘ interface. The RLP protocol **212** is defined in IS-707.2, and the IS-95 protocol is defined in IS-95 mentioned above. A complementary relay layer protocol stack on the BS/MSC 106, including a combination of RLP protocol **216** and IS-95 protocol **218** receives the PPP packets over the Uₘ interface, and passes them to the MT2 relay layer protocol **220** for the L interface to the IWF relay layer protocol **228.** The MT2 relay layer protocol **220** and the IWF relay layer protocol **228** are described in TIA/EIA IS-658 entitled, "Data Services Interworking Function Interface Standard for Wideband Spread Spectrum Digital Cellular System."

The PPP protocol **226** in the link layer **227** of the IWF decodes the PPP packets from the TE2 device **102,** and serves to terminate the PPP connection between the TE2 device **102** and the IWF **108.** The decoded packets are passed from the PPP protocol **226** to the IP protocol in the network layer protocols **224** of the IWF **108** for examination, and further routing to the IP address specified by the TE2 device **102** in the IP packet header (here, the IP address for www.qualcomm.com). If there are any upper layer protocol tasks to be performed at the IWF **108,** such as TCP, they are performed by the upper layer protocols **222.**

Assuming that the ultimate destination of the IP packets generated by the TE2 device **102** is not the IWF **108,** the packets are forwarded through the network layer protocols **224,** link layer 227 and relay layer protocols **228** of the IWF **108** to the next router (not shown) on the Internet. In this manner, IP packets from the TE2 device **102** are communicated through the MT2 device **104,** the BS/MSC **106,** and the IWF **108** towards their ultimate intended destination on the Internet, thereby providing wireless packet data services for the TE2 device **102** according to the IS-707.5 standard relay model.

As illustrated in FIG. 2, the IS-707.5 standard provides the requirements for communication protocols on the links between a TE2 device **102** and an IWF **108,** including the requirements for the Rₘ, the Uₘ, and the L interfaces. These requirements and procedures are applicable to supporting the Mobile IP services described in RFC 2002. However, IS-707.5 does not provide procedures for establishing Mobile IP services in the first instance. In other words, IS-707.5 provides a framework for supporting Mobile IP services, but does not provide procedures for negotiating Mobile IP services, or registering the TE2 device **102** with a home agent and a foreign agent for Mobile IP services. These procedures are found in RFC 2002 itself.

Furthermore, both the network and relay models of IS-707.5 imply the assignment of a single IP address to the TE2 device **102.** No separate provision is made for the assignment of a second IP address for the exclusive use of the MT2 device **104.** Indeed, it is not currently possible to obtain more than one IP address per PPP session. The additional cost of resources in the IWF **108** to support multiple PPP sessions per mobile makes it unattractive to service providers.

This distinction is important when one considers that typically some application layer entity must therefore exist in the TE2 device **102** to support Mobile IP. Unfortunately, the most popular operating system software for personal computing, Microsoft Windows, does not have support for Mobile IP, and is currently not forecast to have such support. As a result, TE2 devices running Microsoft Windows (or one of many other operating systems) are not able to use their "home" IP address when they are not connected to their "home" IP network. This prevents the mobile user from taking advantage of the benefits of Mobile IP services like "push" services and direct e-mail delivery while away from the "home" IP network.

What is needed is a method and system for performing Mobile IP registration of TE2 device, with the MT2 device acting as a proxy for the TE2 device in order to establish Mobile IP support for the TE2 device. More generally, what is needed is a method and system for enabling two networked devices (e.g. the MT2 and the TE2) to share a single IP address.

"IP Multiplexing by Transparent Port-Address Translation" published September 1996 describes a technique to perform address translation without an DNS. United States Patent No. 5,708,655 describes a method and apparatus for addressing a wireless communication station with a dynamically-assigned address.

### SUMMARY OF THE INVENTION

The present invention relates to a method and device as defined in the appended claims.

The present invention is a novel and improved system and method for shifting IP endpoints such as may be performed as part of proxy mobile node registration. The method includes signaling, from a terminal device, a need for mobile data services, and initiating, in a wireless communication device, mobile node registration of the terminal device in response to the signaling step. The terminal device transmits packetized data, and the wireless communication device coupled to the terminal device monitors the packetized data for an Internet Protocol (IP) address contained in an IP address request. The wireless communication device initiates mobile node registration using the IP address if the IP address request is for a static IP address. The wireless communication device prevents the terminal device from sending or receiving packetized data when initiating mobile node registration, and allows the terminal device to send and receive packetized data upon completion of mobile node registration. As a result, the mobile node registration occurs transparently to the terminal device, avoiding the need for the terminal device to have its own Mobile IP support.

In another aspect of the present invention, a networked device (which may be the wireless communication device) shares an IP address with a separate networked device (which may be the terminal device). The sharing occurs by the networked device examining a port number of a received IP packet. The networked device routes the IP packet to an application on the networked device if the port number of the received IP packet corresponds to the application running on the networked device. On the other hand, the networked device routes the IP packet to a separate networked device if the port number of the received IP packet does not correspond to the application running on the networked device.

Furthermore, the networked device originates IP packets including as an origination address an IP address assigned to the separate networked device after determining whether the application on the networked device has a need to originate IP packets.

Alternately, the IP address may be "shifted" to between the networked device and a separate networked device. The networked device shifts the IP address from the separate networked device to itself by blocking transmitted IP packets originating in the separate networked device, and originating IP packets which include as an origination address an IP address assigned to the separate networked device if the networked device determines that an application on said first networked device has a need to originate IP packets. The networked device may also discard received IP packets addressed to the separate networked device while it is using the separate networked device's IP address.

### BRIEF DESCRIPTION OF THE DRAWINGS

The features, objects, and advantages of the present invention will become more apparent from the detailed description set forth below when taken in conjunction with the drawings in which like reference characters identify corresponding items throughout and wherein:
FIG. 1 illustrates a high-level block diagram of a wireless data communication system in which a terminal device connects to the internet via a wireless communication device;
FIG. 2 is a diagram of the protocol stacks in each entity of the IS-707.5 Relay Model;
FIG. 3 is a high-level state diagram of the operation of the MT2 device of the present invention;
FIG. 4 is a diagram of the protocol stacks of each entity of one embodiment of the present invention;
FIG. 5 illustrates an expanded state diagram of the Mobile IP mode state 310 of FIG. 3;
FIG. 6 is a diagram of the protocol stacks of each entity of an alternate embodiment of the present invention;
FIG. 7 illustrates an expanded state diagram of an alternate embodiment of Mobile IP mode 310 of FIG. 3
FIG. 8 is a flow chart illustrating one method for performing IP address shifting;
FIG. 9A is a flowchart illustrating an alternative method for performing IP address shifting in connection with receiving IP packets; and
FIG. 9B is a flowchart illustrating an alternative method for performing IP address shifting in connection with sending IP packets.

### DETAILED DESCRIPTION OF THE PREFERRED EMBODIMENTS

The present invention is intended to support transparent mobility to users of data services enabled MT2 devices. Various embodiments of the present invention are intended to support data services under three different usage models.

The first usage model is one where Mobile IP is not supported, but data services using a dynamically assigned IP address are nevertheless still supported. In this first usage model, the TE2 device is dynamically assigned an IP address by the Internet Service Provider (ISP) to which the TE2 device is currently attached. This first usage model does not use Mobile IP support, and does not use it's "home" IP address. As a result, the TE2 device receives only the data that it explicitly requests while connected to the ISP, rather than having data forwarded to it from its home IP network.

The second usage model is one where Mobile IP support is provided in the MT2 device, as a proxy on behalf of the TE2 device. This second model applies to mobile users who wish to have Mobile IP support, but who do not have a TE2 device that supports Mobile IP. For example, users of TE2 devices such as laptops that are running the Microsoft Windows operating system fall into this second usage model. In this second usage model, the TE2 device may use its "home" IP address (i.e., the "permanent" IP address assigned by its home network), whether they are attached to their home IP network, or are roaming on a Mobile IP-enabled wireless network. This second usage model also provides mobility support for devices that integrate the TE2 device and the MT2 device, such as so-called "smart phones."

The third usage model is one where Mobile IP support is provided in the TE2 device. This third usage model is applicable to users of TE2 devices that do have Mobile IP support, and therefore are not in need of proxy services from an MT2 device. The various embodiments of the present invention are intended to satisfy the requirements of one or more of these three usage models.

It will be apparent to one of ordinary skill in the art that the present invention as described below may be implemented in many different embodiments of software, firmware, and hardware in each of the entities illustrated in the figures (TE2 device **102,** MT2 device **104,** BS/MSC **106** and IWF **108**). The actual software code or control hardware used to implement the present invention is not limiting of the present invention. Thus, the operation and behavior of the present invention will be described without specific reference to the actual software code, it being understood that a person of ordinary skill in the art would be able to design software and control hardware to implement the various embodiments of the present invention based on the description herein.

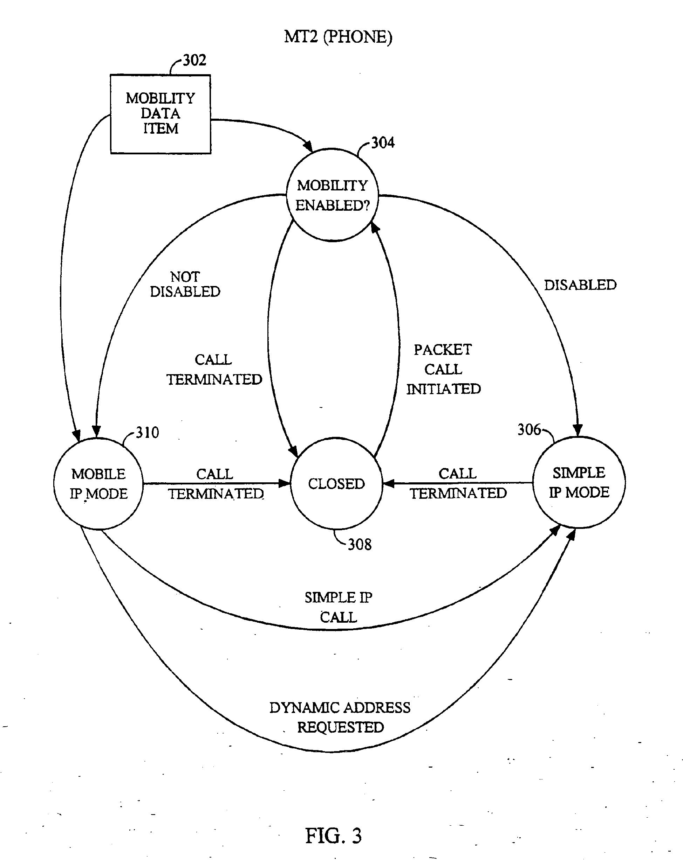

Turning now to FIG. 3, a high-level state diagram of the operation of the MT2 device of the present invention is illustrated. In FIG. 3, the MT2 device begins in closed state **308.** In closed state **308** the MT2 device is not currently in a call, but is awaiting an origination of a call. Mobile-terminated calls (i.e., those where the MT2 device is the called party) are not considered in this state, as they assume that the MT2 device has either already been assigned an IP address, or has already registered for Mobile IP. If the MT2 device has already registered for Mobile IP, it is not in this closed state **308,** but rather is in Mobile IP mode state **310,** discussed more fully below.

When a packet data call is initiated from the TE2 device, the MT2 device transitions from the closed state **308** to the mobility enabled? state **304.** In the mobility enabled? state **304,** the MT2 device checks the value of the mobility data item **302** to determine whether mobility support (for Mobile IP) is enabled. In one embodiment, the mobility data item **302** may have one of three values which may be optionally configured by the mobile user as desired via, for example, a user interface on the TE2 device or the MT2 device. Other embodiments may use more or fewer values in order to allow the mobile user to have more or fewer configuration choices. Still other embodiments do not allow user-configuration of the mobility data item **302.** In still other embodiments, the mobility data item **302** does not exist, but rather the decision is hard-coded into control software.

The first value of the mobility data item is "disabled." When the mobility data item **302** value is "disabled," the MT2 device does not support Mobile IP negotiation and registration. As a result, all packet data calls originated when the mobility data item **302** has the value "disabled" use the simple IP mode **306,** discussed more fully below.

The second value is "if available." When the mobility data item **302** value is "if available," then the MT2 device will provide Mobile IP negotiation and registration unless the infrastructure (BS/MSC **106** and IWF **108)** does not support Mobile IP or unless the mobile node registration attempted by the MT2 device fails. If the infrastructure does not support Mobile IP, then the packet data call becomes a simple IP mode **306** call. In other words, the "if available" value for the mobility data item **302** allows the user of the TE2 device and MT2 device to obtain the advantages of Mobile IP when it is supported by the infrastructure and is successfully negotiated, but still allows a packet data call without Mobile IP support otherwise. In one embodiment in which the mobile user is not allowed to change the value of mobility data item **302,** this second value is used. Alternately, the mobility data item **302** may always be set to "if available", or be omitted entirely, eliminating the transition between mobility enabled? state **304** and simple IP mode state **306.**

The third value is "exclusively." When the mobility data item 302 value is "exclusively," then the MT2 device will provide Mobile IP negotiation and registration unless the infrastructure (BS/MSC **106** and IWF **108)** does not support Mobile IP or unless the mobile node registration attempted by the MT2 device fails. However, as contrasted with the "if available" value above, if either the infrastructure does not support Mobile IP or the mobile node registration attempt fails; then the MT2 device does not complete a simple IP call, but rather forces the packet call origination attempt to fail completely. In other words, the "exclusively" value for mobility data item **302** prevents any packet data call other than a Mobile IP supported call from originating from the MT2 device.

If the mobility data item **302** value is "disabled," or if the mobility data item **302** value is "if available" but Mobile IP is not supported by the infrastructure, then the MT2 device will enter simple IP mode **306** on a packet data call origination attempt. In one embodiment, the simple IP mode **306** employs the conventional IS-707.5 relay model as illustrated and described with reference to FIG. 2.

If the mobility data item **302** value is either "if available" or "exclusively," the MT2 device transitions from the mobility enabled? state **304** to the mobile IP mode **310.** It is in this mobile IP mode **310** where the MT2 device engages in mobile node registration for Mobile IP services as a proxy on behalf of the TE2 device as described further below.

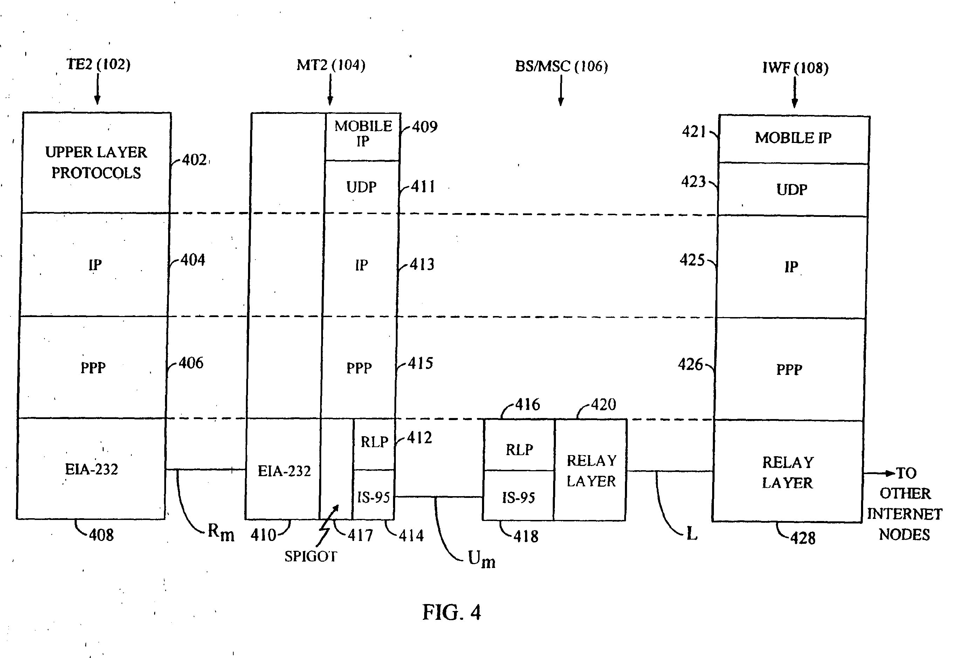

Turning now to FIG. 4, a diagram of the protocol stacks of each entity of one embodiment of the present invention is shown. A significant difference between the diagram of FIG. 4 and that of FIG. 2 is that in FIG. 4, additional protocol layers exist in the MT2 device **104** to support the mobile node registration of the present invention. These additional protocol layers include PPP protocol **415,** IP protocol **413,** UDP protocol **411** and Mobile IP protocol **409.** To the extent that the protocol layers of FIG. 4 operate the same as those of FIG. 2, they will not be expanded upon. Rather, the following discussion will focus on the differences between FIG. 4 and FIG. 2.

An example of the operation of FIG. 4 is as follows. An upper layer protocol **402** entity, such as an application program running on the TE2 device **102** has a need to send IP packets over the Internet, similar to that of upper layer protocol **202** entity of FIG. 2. The application generates a message using, for example, either the TCP or UDP protocols, and the TCP or UDP packet is encapsulated by the IP protocol **404** using the destination IP address. The Point to Point Protocol (PPP) protocol **406** frames the IP packets and transmits them across the Rₘ interface using the relay layer protocol **408** EIA-232 to the EIA-232-compatible port on the MT2 device running the EIA-232 protocol **410.**

However, as is known in the art, in order to establish communications over a point-to-point link, each end of the PPP link (here, the TE2 PPP protocol **406** and IWF PPP protocol **426)** must first send Link Control Protocol (LCP) packets for establishing, configuring and testing the data link connection. After the link has been established by the LCP, PPP protocol **406** then sends Network Control Protocol (NCP) packets to configure the network layer protocols (here, the TE2 IP protocol **404** and IWF IP protocol **425**). After each of the network layer protocols has been configured, datagrams from each network layer protocol can be sent over the link between them.

In one embodiment, the NCP for IP is the IP Control Protocol (IPCP). The IPCP is described in detail in RFC 1332, entitled "The PPP Internet Protocol Control Protocol (IPCP)," published May 1992. The IPCP is responsible for configuring, enabling, and disabling both the TE2 IP protocol **404** and the IWF IP protocol **425** that run at either end of the point-to-point link. As is known in the art, IPCP uses configuration requests, which are messages that may include a configuration option for IP address. This configuration option portion of the configuration request message provides a way to negotiate the IP address to be used by the sender of the configure request (here, the TE2 device **102**). It allows the sender of the configure request to state which IP address is desired by specifying an IP address, or to request that the peer (here, the IWF **108**) provide a dynamic IP address for the sender. If the sender of the configure request sets the IP address field in the IP address configuration option to all zeros, then the peer can provide a dynamic IP address by sending a configure NAK (negative acknowledgment) for the option, and returning a valid IP address. If, on the other hand, the sender of the configure request sets the IP address field in the IP address configuration option to a specified IP address, the peer can indicate that the specified IP address is acceptable by sending a configure ACK for the option. The present invention takes advantage of the IPCP communications between the TE2 device **102** and the IWF **108** to determine whether and when to act as a proxy for the TE2 device during mobile node registration.

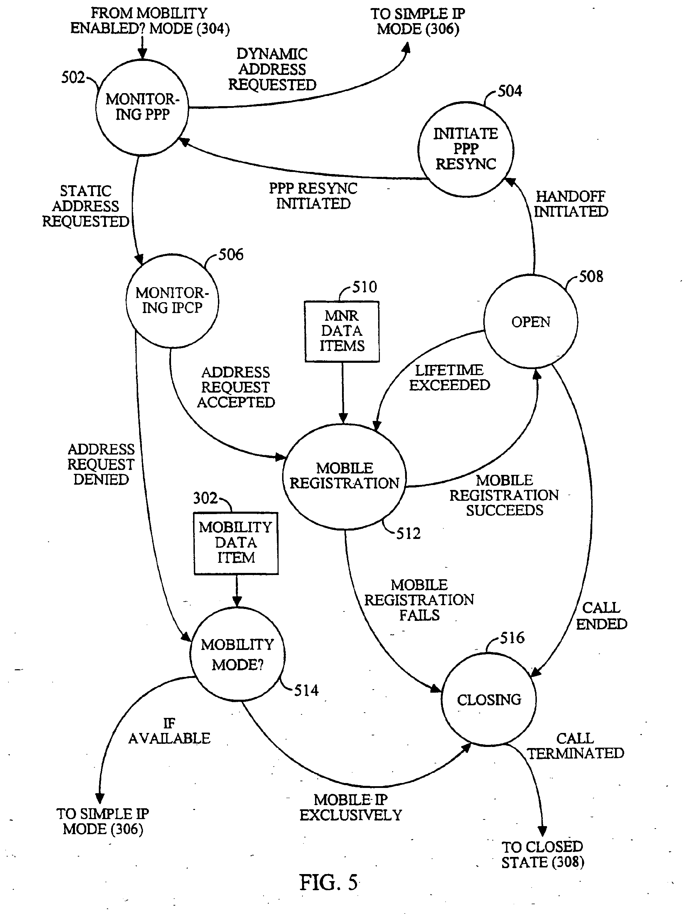

FIG. 5 illustrates an expanded state-diagram of the Mobile IP mode state **310** of FIG. 3. When the mobility enabled? state **304** (FIG. 3) determines that the mobility data item **302** is not disabled, it transitions to the monitoring PPP substate **502.** It should be noted that it is possible to transition from any substate of FIG. 5 to the closing substate **516** if the call is ended. However, for simplicity call ended transition is illustrated only from the open substate **508** to closing substate **516.**

In the monitoring PPP substate **502,** the MT2 device **104** inserts a network "spigot" **417** into the MT2 device protocol stack between the RLP protocol **412** and EIA-232 protocol **410** peers. In other words, PPP packets passing between the EIA-232 protocol **410** and the RLP protocol **412** are monitored and examined by the MT2 device **104.** This allows the MT2 device **104** to monitor PPP packets as they pass between the TE2 device **102** and the IWF **108.**

The first LCP packet is cached by the MT2 device **104** for use after an inter-IWF handoff as will be described below with respect to the initiate PPP resync state **504.** The MT2 device **104** continues to monitor the PPP packets being exchanged between the TE2 device **102** and the IWF **108** until an IPCP packet from the TE2 device **102** is detected by the MT2 device **104.** This IPCP packet is then examined by the MT2 device **104** to determine whether a static or dynamic IP address is being requested in the IP address configuration option of the configuration request. If the IP address field contains an IP address that is all zeros, then the TE2 device is requesting a dynamic address. In such a case, there is no request for Mobile IP support by the TE2 device **102,** and the MT2 device **104** transitions to simple IP mode **306** (FIG. 3).

If, on the other hand, the IP address field in the configure request sent by the TE2 device **102** contains a static (i.e., non-zero) IP address, the MT2 device **104** them transitions to the monitoring IPCP state **506.** In the monitoring IPCP state **506,** the MT2 device **104** monitors the IPCP packets being exchanged between the TE2 device **102** and the IWF **108.** Specifically, the MT2 device **104** examines the IPCP packets to determine whether the static IP address request made by the TE2 device **102** has been accepted by the IWF **108** with a configure ACK.

If the static IP address request made by the TE2 device **102** is denied by the IWF **108,** then the MT2 device **104** transitions to the mobility mode? state **514,** where it checks the value of the mobility data item **302.** If the value of the mobility data item **302** value is "if available," then the MT2 device **104** transitions to the simple IP mode state **306** (FIG. 3) because it is assumed that the user will be satisfied with a simple IP call (i.e., a dynamically assigned IP address) if Mobile IP support is unavailable. If, however, the mobility data item **302** value is "exclusive," then the MT2 device **104** transitions to the closing state **516** because it is assumed that the user will not be satisfied with a simple IP call.

If the static IP address request made by the TE2 device **102** is accepted by the IWF **108,** then the MT2 device **104** transitions to the mobile registration state **512** upon completion of IPCP negotiation. In mobile registration state **512,** the MT2 device **104** initiates the PPP protocol **415,** the IP protocol **413,** the UDP protocol **411,** and the Mobile IP protocol **409.** The MT2 device **104** then flow controls the TE2 device **102.** As used herein, "flow control" refers to the step of preventing the TE2 device **102** from sending or receiving data over its relay layer interface. In the embodiment of FIG. 4, this is the link between the TE2 device's EIA-232 protocol **408** and the MT2 device's EIA-232 protocol **410.** Software or hardware flow control may be used. For example, in one embodiment, the MT2 device **104** toggles one of the pin voltages between the MT2 device **104** and the TE2 device **102.**

By flow controlling the TE2 device **102,** the MT2 device **104,** and specifically the IP protocol **413** may now become the IP-endpoint for the purpose of mobile node registration. This allows the MT2 device **104** to perform mobile node registration on behalf of the TE2 device **102,** transparent to the TE2 device **102.** Conceptually, this "shifts" the IP-endpoint from the TE2 device **102,** where it otherwise would be, to the MT2 device **104.**

The MT2 device **104** reads the Mobile Node Registration (MNR) data items **510.** In one embodiment, these data items are stored in an appropriate non-volatile memory circuit (not shown). These MNR data items **510** are the data items needed to perform mobile node registration. These MNR data items **510** may include security parameter index, the MD5 authentication key, as described in RFC 2002, and the home agent IP address.

The MT2 device **104** then performs mobile node registration as described in RFC 2002 using the static IP address requested by the TE2 device **102** and the MNR data items **510.** The details of mobile node registration are described in RFC 2002, and therefore will not be described in detail here. Briefly, the mobile IP protocol **409** sends a foreign agent solicitation message to the mobile IP protocol **421** in IWF **108.** This foreign agent solicitation message is passed down to the UDP protocol **411.** UDP protocol **411** acts as a datagram service as is known in the art, and passes the foreign agent solicitation message to IP protocol **413** where it is packetized with the IP header of either broadcast address or the "all routers" multicast address in accordance with RFC 2002.

The IP protocol **413** then passes the IP packet to PPP protocol **415** which packetizes it into a PPP packet and forwards it to the RLP protocol **412** and IS-95 protocol **414** for transmission over the Uₘ interface. A complementary RLP protocol **416** and IS-95 protocol **418** in the BS/MSC **106** passes the data to the relay layer protocol **420** for transmission across the L interface to relay layer protocol **428.**

PPP protocol **426** then de-packetizes the PPP packets received and passes them to IP protocol **425.** IP protocol **425** removes the IP header and routes the packets to the UDP protocol **423** that, in turn, passes the depacketized foreign agent solicitation message to mobile IP protocol **421.** If mobile IP protocol **421** is present in IWF **108,** then there is a foreign agent entity resident in the IWF **108,** and it responds with an agent advertisement message which follows the reverse path back to mobile IP protocol **409** in the MT2 device **104.**

The mobile IP protocol **409** then sends out a mobile node registration message to the foreign agent on the IWF **108.** If the mobile node registration message is acceptable to the foreign agent, it will forward the mobile node registration message to a home agent entity resident at the TE2 device's home IP network (i.e., the one encompassing the static IP address requested by the TE2 device **102).**

If the mobile node registration message is acceptable to the home agent, then the home agent creates a mobility binding for the TE2 device **102** using the "care of" address of the foreign agent. A mobility binding, as described in RFC 2002, is a routing that takes any IP packets intended for the TE2 device **102** that arrive at the TE2 device's home network and forward them to the foreign agent using IP tunneling.

Upon receiving notification from the home agent that the mobility binding has been created, the foreign agent then creates an association between the inner IP address in the tunneled packet (i.e., the static IP address requested by the TE2 device **102),** and the "phone number" of the MT2 device **104.** Here, the word "phone number" is used in its broadest sense to represent the identification number of the MT2 device **104.** As used herein, it is intended to refer to the Mobile Identification Number (MIN) of the MT2 device **104,** its Electronic Serial Number (ESN), or other unique identifier that the MT2 device **104** has registered with the BS/MSC **106** as is known in the art. The IWF **108** maintains this IP to MIN or IP to ESN translation.

In order to perform this mobile node registration, the present invention reroutes IP packets from RLP protocol **412** to MT2 PPP protocol **415** to ensure delivery of the requisite data to the mobile node registration software running at the mobile IP protocol **409** level of the MT2 device protocol stack. It should be noted that the MT2 PPP protocol **415** is not a full PPP implementation as described in RFC 1661. In the embodiment of FIG. 4, MT2 PPP protocol **415** does not perform any negotiation for protocol or link establishment, it only frames, unframes, and performs any required character escaping of IP packets that are sent and received by the MT2 device **104** during mobile registration state **512** because PPP has already been negotiated between the TE2 device **102** and the IWF **108** as described above.

If the mobile node registration described above and performed during mobile node registration state **512** fails for any reason, in one embodiment the MT2 device **104** exits the mobile IP protocol **409,** the UDP protocol **411,** the IP protocol **413** and the PPP protocol **415,** and transitions to closing state **516.** Possible reasons for failure may include the foreign agent or the home agent rejecting the mobile node registration message. In other embodiments, the MT2 device **104** may attempt to resynchronize PPP with a dynamic IP address, rather than the static IP address requested by the TE2 device.

Otherwise, upon successful mobile node registration in mobile registration state **512,** the MT2 device exits the mobile IP protocol **409,** the UDP protocol **411,** the IP protocol **413** and the PPP protocol **415,** and then transitions to the open-state **508.** In the open state **508,** the MT2 device **104** acts in accordance with the IS-707.5 relay model as shown in FIG. 2. Once in this open state **508,** the data arriving at the RLP protocol **412** of the MT2 device **104** is merely sent over the EIA-232 interface between the TE2 device **102** and the MT2 device **104**.

The MT2 device remains in the open state **508** until one of three things happens: the call is ended, the MT2 device **104** is handed off to a different IWF, or the mobile registration lifetime has been exceeded. The call may be ended in many ways. For example, the user may press an "END" key (not shown) or the like on the MT2 device **104,** thereby intentionally ending the data call. Another example is that the TE2 device **102** or the IWF **108** unilaterally terminates the PPP session between them. In yet another example, the data call may be terminated simply because the radio link between the MT2 device **104** and the BS/MSC **106** becomes so degraded that the call is dropped. If the call is ended in one of these ways, the MT2 device **104** transitions to the closing state **516.**

In the closing state **516,** the MT2 device **104** performs housekeeping functions required to shut down the mobile IP protocol stack (mobile IP protocol **409,** UDP protocol **411,** IP protocol **413,** and PPP protocol **415)** if it is still in place. Additionally, the MT2 device **104** removes the network "spigot" **417** if it is still in place. Finally, any appropriate user notification message may be displayed (for example, on a user interface, not shown) or otherwise presented to the user to indicate that the mobile IP registration process was unsuccessful. Optionally, a more detailed description of what failure occurred and a cause (if known) may also be displayed. After making any notifications and completing any housekeeping cleanup, the MT2 device **104** then transitions to the closed state **308** (FIG. 3).

Alternately, while in the open state **508,** the MT2 device **104** may be handed off to another BS/MSC **106.** Typically, this will happen as the MT2 device **104** moves from one geographic location to another that is outside the service area of the original BS/MSC **106.** If the two BS/MSC's are not served by the same IWF 108, then an inter-IWF handoff occurs. The MT2 device **104** may detect this either by examining the IS-95 Packet Zone ID, or by noting a change in the System Identification (SID) or Network Identification (NID) of the serving BS/MSC **106.** In either case, the MT2 device **104** will transition to the initiate PPP resync state **504.**

In the initiate PPP resync state **504,** the MT2 device **104** initiates a PPP resync with the IWF **108** by sending the first LCP packet which was cached at the beginning of PPP negotiations as described above. This invokes an exchange of LCP packets in reaction from the IWF **108.** Upon detecting this exchange of LCP packets, the MT2 device then transitions back to the monitoring PPP state **502** as described above.

If, on the other hand, during the open state **508,** the mobile registration lifetime as defined in RFC 2002 is exceeded, the MT2 device **104** transitions directly back to mobile registration state **512** to renegotiate mobile node registration as described above.

Thus, in the embodiment of FIG. 4, the additional protocol layers in the MT2 device **104** (PPP protocol **415,** IP protocol **413,** UDP protocol **411,** and mobile IP protocol **409)** are brought up only to perform mobile node registration in mobile registration state **512,** and are shut down after leaving mobile registration state **512.** All IP traffic during the time that these additional protocol layers are up initiates and terminates at the MT2 device **104.** Conceptually, this "shifts" the IP endpoint from the TE2 device **102** during mobile node registration, and then back to the TE2 device **102** upon completion of mobile node registration. In this manner, the MT2 device **104** serves as a proxy for TE2 device **102** during mobile node registration, obviating the need for the TE2 device **102** to have IP mobility support of its own.

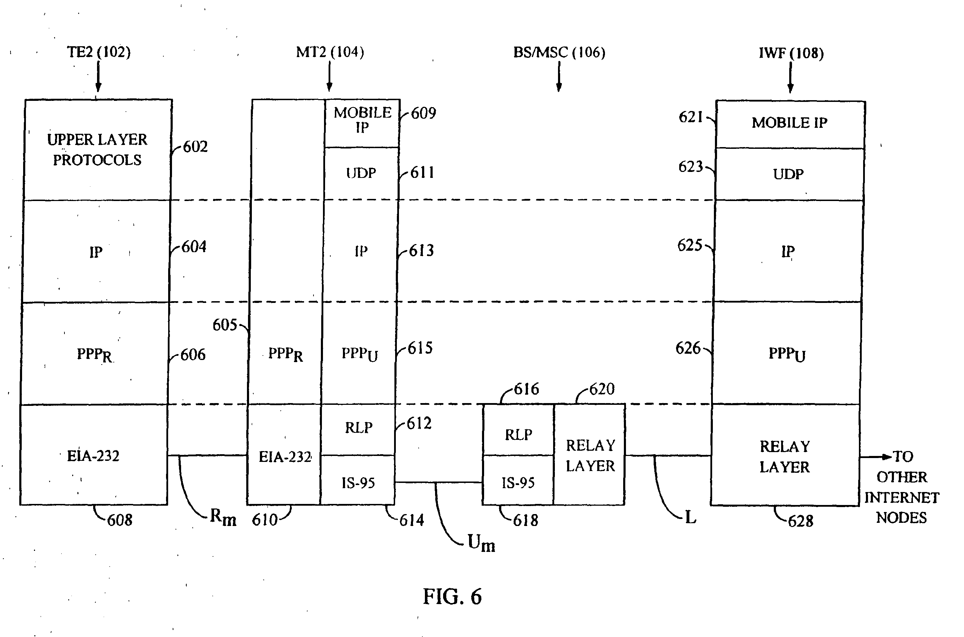

FIG. 6 shows a diagram of the protocol stacks of each entity of an alternate embodiment of the present invention. A significant difference between FIG. 6 and FIG. 4 is that in the embodiment of FIG. 6, a peer relationship exists between the MT2 device **104** and the TE2 device **102** at the PPP level. Note that PPP_{R} protocol **605** of MT2 device **104** serves as the termination for the PPP_{R} protocol **606** of the TE2 device **102.** Note also that the PPP_{U} protocol **626** of the IWF **108** serves as the termination for the PPP_{U} protocol **615** of the MT2 device **104.** In contrast to the embodiment of FIG. 4, these PPP_{R} and PPP_{U} links survive in the MT2 device **104** after mobile node registration.

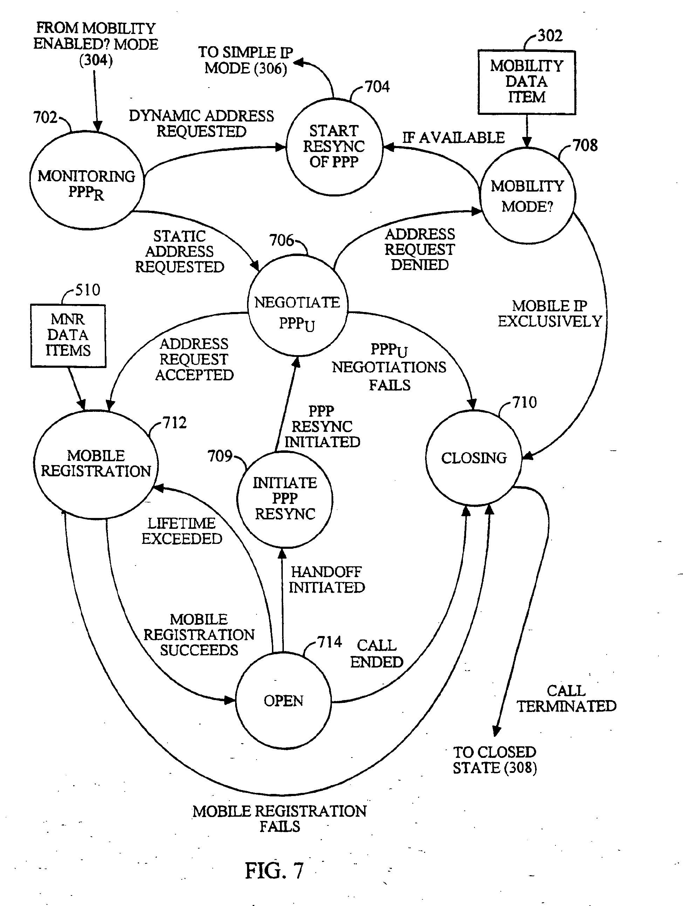

The operation of FIG. 6 will be explained with reference also to the state diagram of FIG. 7. FIG. 7 is a state diagram of an alternate embodiment of Mobile IP mode **310** of FIG. 3. The MT2 device **104** begins in monitoring PPP_{R} state **702.** In the monitoring PPP_{R} state **702** the MT2 device **104** initiates the PPP_{R} protocol **605,** and negotiates the PPP_{R} link between the MT2 device **104** and the TE2 device **102.** The MT2 device **104** also caches the first LCP packet received from the TE2 device **102** for use in a PPP resync later, if required.

The MT2 device **104** continues to monitor the PPP_{R} link looking for the TE2 device's IPCP configure request. Upon detecting the TE2 device's IPCP configure request, the MT2 device **104** examines the IP address field. If the requested IP address is dynamic, that is, all zeros, then the MT2 device **104** transitions to start resync of PPP state **704.**

In the start resync of PPP state **704,** the MT2 device **104** shuts down the PPP_{R} protocol **605,** and forwards the original LCP packet (cached earlier in the monitoring PPP_{R} state **702**) to the IWF **108,** thereby initiating a PPP link directly between the TE2 device **102** and the IWF **108.** This is done to avoid the overhead of running the PPP_{R} protocol **605** and PPP_{U} protocol **615** on the MT2 device **104** for a simple IP call. Since a dynamic address was requested, the extra PPP layers in the MT2 device **104** are unnecessary, and the normal IS-707.5 relay model of FIG. 2 applies.

If, however, the TE2 device's IPCP configure request contains a static IP address, then the MT2 device **104** transitions to the negotiate PPP_{U} state **706** after the PPP_{R} link has been fully negotiated in the monitoring PPP_{R} state **702.** Once in the negotiate PPP_{U} state **706,** the MT2 device **104** initiates the additional layers in the MT2 protocol stack including mobile IP protocol **609,** UDP protocol **611,** IP protocol **613,** and PPP_{U} protocol **615.** The MT2 device **104** also flow controls the TE2 device **102.** Again, flow control refers to preventing the TE2 device **102** from sending or receiving any data over the Rₘ interface.

The MT2 device **104** then negotiates the PPP_{U} link between the PPP_{U} protocol **615** and PPP_{U} protocol **626.** In the negotiation of the PPP_{U} link, the MT2 device **104** uses the same parameters as were requested by the TE2 device **102** during negotiation of the PPP_{R} link. Specifically, the static IP address requested by the TE2 device **102** from the MT2 device **104** is used by the MT2 device **104** in negotiating the PPP_{U} link with the IWF **108.**

During the PPP_{U} link negotiation, the MT2 device **104** monitors the IPCP packets returned by the IWF **108.** If the IPCP configure request containing the static IP address is rejected by the IWF **108,** then the MT2 device **104** transitions to the mobility mode? state **708.**

In mobility mode? state **708,** the mobility data item **302** is checked. If the mobility data item **302** value is "if available," then the MT2 device **104** transitions to the start resync of PPP state **704** in preparation for a simple IP call attempt in simple IP mode **306.** If the mobility data item **302** value is "mobile IP exclusively," then the MT2 device **104** transitions to the closing state **710.** Closing state **710** is similar in operation to closing state **516** of FIG. 5.

If the IPCP configure request containing the static IP address is accepted by the IWF **308,** then the MT2 device **104** transitions to mobile registration state **712.** The condition of the system upon entry into the mobile registration state **712** is that from the point of view of the TE2 device **102,** the IP address of the MT2 device **104** appears to be that of the IWF **108.** Furthermore, from the point of view of the IWF **108,** the IP address of the MT2 device **104** appears to be that of the TE2 device **102.** In other words, the MT2 device **104** is maintaining two IP addresses as between PPP_{R} protocol **605** and PPP_{U} protocol **615.** As a result, the MT2 device **104** passes PPP packets between PPP_{R} protocol **605** and PPP_{U} protocol **615** without regard to the IP addresses.

The mobile registration state **712** is very similar to the mobile registration state **512** of FIG. 5, with some significant exceptions. First, in mobile registration state **712** mobile registration packets are passed from PPP_{U} protocol **615** up to IP protocol **613** rather than to PPP_{R} protocol **605.** This is different from the operation of FIGS. 4 and 5 in that the routing of mobile registration packets occurs at one layer higher in the MT2 protocol stack. Second, no network spigot is needed in the embodiment of FIG. 6 because the PPP_{U} protocol **615** serves to terminate the PPP link between the MT2 device **104** and IWF **108.** As a result, all the PPP packets exchanged during negotiation with the IWF **108** are originated and terminated with the MT2 device **104** itself, rather than the MT2 device **104** needing to "eavesdrop" on PPP negotiation between the TE2 device **102** and the IWF **108** as is the case with respect to the embodiment of FIGS. 4 and 5.

If the mobile node registration succeeds in mobile registration state **712,** then the MT2 device **104** transitions to open state **714.** The open state **714** is very similar to the open state **508** of FIG. 5. A significant difference between the embodiment of FIG. 7 and FIG. 5 is that in FIG. 7 the PPP_{R} protocol **605** and PPP_{U} protocol **615** remain in place during the open state **714.** As a result, IP packets arriving at the MT2 device over the Uₘ interface are routed by the RLP protocol **612** to the PPP_{U} protocol **615,** and in turn to PPP_{R} protocol **605** and then EIA-232 protocol **610,** rather than directly to the EIA-232 protocol **610.** Similarly, all IP packets received by the MT2 device **104** over the Rₘ interface are routed by the EIA-232 protocol **610** to PPP_{R} protocol **605,** and in turn PPP_{U} protocol **615** and RLP protocol **612,** rather than directly to RLP protocol **612.**

If an inter-IWF handoff occurs during open state **714,** then the MT2 device **104** transitions to the initiate PPP resync state **709.** Initiate PPP resync state **709** operates similarly to that of initiate PPP resync state **504.** It should be noted, however, that in initiate PPP resync state **709,** only the PPP_{U} link is renegotiated rather than the PPP_{R} link. As a result, the PPP_{R} link remains unchanged making the inter-IWF handoff transparent to the TE2 device **102** and therefore no cached LCP packets are required.

If the call is ended while in open state **714** (or indeed, any other state of FIG. 7), the MT2 device **104** transitions to closing state **710.** Closing state **710** is very similar to closing state **516** of FIG. 5. However, in closing state **710,** there is no network spigot that needs removing. Additionally, depending on the timing of the call ending, there may remain some PPP instances that are in mid-negotiation. In any event, the MT2 device **104** shuts down Mobile IP protocol **609,** UDP protocol **611,** IP protocol **613,** PPP_{R} protocol **605,** and PPP_{U} protocol **615** if they are running. As in the embodiment of FIG. 5, the reason for call failure may optionally be displayed.

Thus, in the embodiment of FIG. 6, the additional protocol layers in the MT2 device **104** (down Mobile IP protocol **609,** UDP protocol **611,** and IP protocol **613)** are brought up only to perform mobile node registration in mobile registration state **712,** and are shut down after leaving mobile registration state **712.** However, PPP_{R} protocol **605** and PPP_{U} protocol **615** remain intact during the open state **714.** In this manner, the MT2 device **104** serves as a proxy for TE2 device **102** during mobile node registration, obviating the need for the TE2 device **102** to have IP mobility support of its own.

The above description provides an example of the use of IP address shifting to provide proxy services on behalf of an attached terminal device. There are additional applications for the IP address shifting method of the present invention besides Mobile IP registration. The IP address shifting method of the present invention may be used for any proxy service, or for any two network devices that need to share a single IP address. For example, it may be used between an MT2 device **104** and a TE2 device **102** when the TE2 device **102** is in an active data services call (e.g., the user of the TE2 device **102** is remotely dialing in to check e-mail), and the MT2 device **104** has an application running that has a need to send or receive IP packets (e.g., a web-browser application).

One unique aspect of the present invention is that it provides a technique for proxy services in a system where only a single IP address is available for use by both the MT2 device **104** and the TE2 device **102.** For example, both the network and relay models of IS-707.5 imply the assignment of a single IP address to the TE2 device **102.** No separate provision is made for the assignment of a second IP address for the exclusive use of the MT2 device **104.** Indeed, it is not currently possible to obtain more than one IP address per PPP session. The additional cost of resources in the IWF 108 to support multiple PPP per mobile sessions makes it unattractive to service providers.

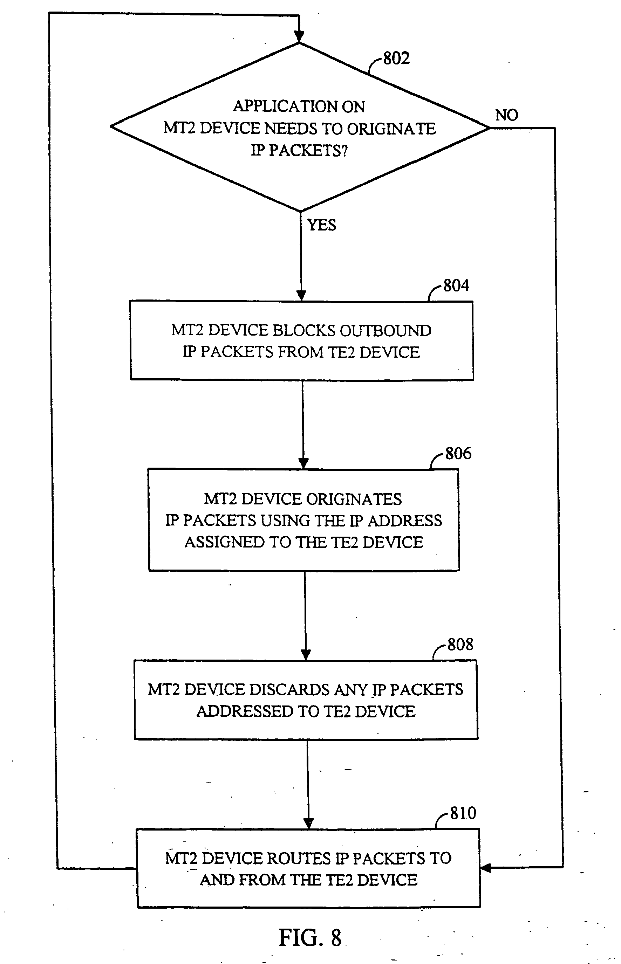

The fact that only one IP address is assigned to the TE2 device **102** also implies that any other applications running on the MT2 device **104** that need an IP address, whether or not for proxy services, must somehow "share" the IP address assigned to the TE2 device **102.** One method for performing this IP address shifting is mentioned above, and graphically presented in the flowchart of FIG. 8. The method of FIG. 8 may be performed by the systems described above with reference to FIGS. 4 and 6.

The process of FIG. 8 begins at decision **802** where it is determined whether any application running on the MT2 device **104** needs to originate IP packets. For example, the Mobile IP application **409** of FIG. 4 or **609** of FIG. 6 has a need to originate IP packets to perform its functions as a proxy for Mobile IP node registration. Another example of an application running on the MT2 device **104** that may need to originate IP packets would be a web browser. There are many other applications that utilize IP packet services that may be running on the MT2 device **104,** particularly if the MT2 device **104** is a combination computer/phone (or "smartphone").

The MT2 device **104** then blocks output IP packets from the TE2 device **102** at block **804.** This may be accomplished as described above by the MT2 device **104** "flow controlling" the TE2 device **102** (i.e., preventing the TE2 device **102** from sending or receiving data over its relay layer interface). For example, in the embodiment of FIG. 4, the link between the TE2 device's EIA-232 protocol **408** and the MT2 device's EIA-232 protocol **410** is flow controlled by the MT2 device **104.** Software or hardware flow control may be used. For example, in one embodiment, the MT2 device **104** toggles one of the pin voltages between the MT2 device **104** and the TE2 device **102.**

By flow controlling the TE2 device **102,** the MT2 device **104,** and specifically the IP protocol **413** may now become the IP-endpoint for the purpose of further IP packets sent or received. Conceptually, this "shifts" the IP-endpoint from the TE2 device **102,** where it otherwise would be, to the MT2 device **104.** Thus, at block **806** the MT2 device then sends and receives IP packets using the IP address originally assigned to the TE2 device **102.**

In this first embodiment of the IP address shifting method of the present invention, any IP packets intended for the TE2 device **102** are discarded by the MT2 device **104** at block **808.** This may occur simply by the IP packet being ignored by any application running on the MT2 device **104.**

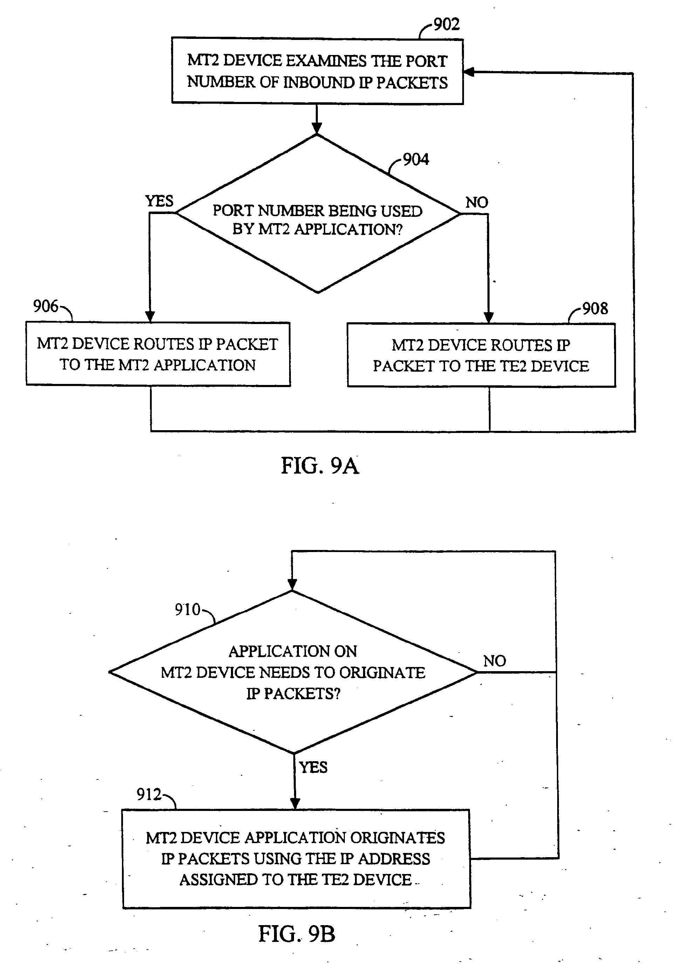

A second embodiment of the IP address shifting method of the present invention is illustrated in FIGs. 9A-9B. In this second embodiment, the IP address is conceptually "shifted" as between the MT2 device **104** and the TE2 device **102** on a packet-by-packet basis, rather than by flow-controlling the TE2 device **102.** The method of FIGs. 9A-9B may be performed by the systems described above with reference to FIGS. 4 and 6.

At block **902,** the MT2 device examines the port number of the inbound IP packets. As stated above, the port number is assigned by a transport layer protocol such as TCP or UDP. Thus, although two IP packets may have the same IP destination address, they may have different port numbers. As is known in the art, different applications running on the same device, or on different devices, may use different port numbers. Examining the port number of the inbound IP packet in block **902** may involve un-framing the PPP packets to examine the IP packets directly. For example, in the network model depicted in FIG. 6, the PPP_{U} protocol **615** would un-frame the incoming PPP packet from the IWF **108.** The MT2 device **104** would then examine the port number of the IP packet. Alternately, it may involve merely indexing into the IP packet by a predefined number of bits. The length of PPP headers, IP headers, and the location of the port number within the IP packet is well-defined according to the various standards.

At decision **904,** the MT2 device **104** determines whether the IP packet includes a port number being used by an application running on the MT2 device **104.** For example, if the MT2 device **104** were running an Internet browser application, that browser application would be using a particular port number, perhaps port 200. If the port number in the IP packet is also port 200, then the IP packet includes a port number being used by the example application running on the MT2 device **104.** If, however, the port number in this IP packet is something other than 200, then the IP packet would not include a port number being used by the example application running on the MT2 device **104.**

If the port number of the IP packet is one that is being used by an application on the MT2 device **104,** then the flow proceeds to block **906** where the MT2 device **104** routes the IP packet to the MT2 application. If, however, the port number of the IP packet is one that is not being used by an application on the MT2 device **104,** then the flow proceeds to block **908** where the MT2 device **104** routes the IP packet to the TE2 device. This may involve re-framing the PPP packet and sending it over the Rₘ link to the TE2 device **102.** In the network model embodiment described in FIG. 6, this would be accomplished by the PPP_{R} protocol **605.** In this way, the MT2 device **104** intercepts and processes all IP packets destined for applications running on the MT2 device **104,** while still passing all other IP packets to the TE2 device **102.** Thus, none of the IP packets are discarded by the MT2 device **104,** and the TE2 device **102** is not flow-controlled.

If the application on the MT2 device **104** needs to originate IP packets as determined at decision **910** of FIG. 9B, then the MT2 device application originates IP packets using the IP address assigned to the TE2 device **102** at block **912.** In either case, the flow returns to block **910** where the MT2 device **104** continues to determine if there is a need to originate IP packets. Thus, the MT2 device **104** "shares" the IP address assigned to the TE2 device **102** on a packet-by-packet basis.

The previous description of the preferred embodiments is provided to enable any person skilled in the art to make or use the present invention.

## Claims

1. A method for sharing an Internet Protocol, IP, address between a wireless communication device (104) and a terminal device (102), the method comprising the steps of:
examining, in said wireless communication device (104), a port number of a received IP packet;
routing, in said wireless communication device (104), said IP packet to an application on said wireless communication device (104) if said port number of said received IP packet corresponds to said application; and
routing, from said wireless communication device (104), said IP packet to said terminal device (102) if said port number of said received IP packet does not correspond to said application.

2. The method of claim 1, further comprising the step of:
originating IP packets from said wireless communication device (104), said IP packets including as an origination address an IP address assigned to said terminal device (102).

3. A method as claimed in claim 1 or claim 2, further comprising shifting an Internet Protocol (IP) address between the wireless communication device (104) and the terminal device (102), wherein shifting the IP address comprises the steps of :
blocking, in said wireless communication device (104), transmitted IP packets originating in said terminal device (102); and
originating IP packets from said wireless communication device (104), said IP packets including as an origination address an IP address assigned to said terminal device (102).

4. The method of any preceding claim, further comprising the step of:
determining, in said wireless communication device (104), whether an application on said wireless communication device (104) has a need to send or receive IP packets.

5. The method of any preceding claim, further comprising the step of:
discarding, in said wireless communication device (104), received IP packets addressed to said terminal device (102).

6. A wireless telecommunication device (104) comprising:
means adapted to examine port number of a received IP packet;
means adapted to route said IP packet to an application on said wireless telecommunication device (104) if said port number of said received IP packet corresponds to said application; and
means adapted to route said IP packet to a terminal device (102) if said port number of said received IP packet does not correspond to said application.

7. The wireless telecommunication device (104) of claim 6, further comprising:
means adapted to originate IP packets from said wireless telecommunication device (104), said IP packets including as an origination address an IP address assigned to said terminal device (102).

8. A wireless telecommunication device (104) as claimed in claim 6 or claim 7, further comprising:
means adapted to block transmitted IP packets originating in the terminal device (102); and
means adapted to originate IP packets from said wireless communication device (104), said IP packets including as an origination address an IP address assigned to said terminal device (102).

9. The wireless communication device (104) of any of claims 6 to 8, further comprising:
means adapted to determine whether an application on said wireless telecommunication device (104) has a need to originate IP packets.

10. The wireless communication device (104) of any of claims 6 to 9, further comprising:
means adapted to discard, in said wireless telecommunication device (104), received IP packets addressed to said terminal device (102).

## Patentansprüche

1. Ein Verfahren zum Teilen bzw. gemeinsamen Nutzen einer Internet Protocol- bzw. IP-Adresse zwischen einer Drahtlos-Kommunikationsvorrichtung (104) und einer Terminal- bzw. Endgerätvorrichtung (102), wobei das Verfahren folgende Schritte aufweist:
Untersuchen in der Drahtlos-Kommunikationsvorrichtung (104), einer Port-Zahl eines empfangenen IP-Pakets;
Routen, in der Drahtlos-Kommunikationsvorrichtung (104), des IP-Pakets zu einer Anwendung auf der Drahtlos-Kommunikationsvorrichtung (104), wenn die Port-Zahl des empfangenen IP-Pakets der Anwendung entspricht;
Routen von der Drahtlos-Kommunikationsvorrichtung (104), des IP-Pakets zu der Terminalvorrichtung (102), wenn die Port-Zahl des empfangenen IP-Pakets nicht der Anwendung entspricht.

2. Verfahren nach Anspruch 1, das weiterhin folgenden Schritt aufweist:
Hervorbringen von IP-Paketen von der Drahtlos-Kommunikationsvorrichtung (104), wobei die IP-Pakete als eine Herkunftsadresse eine IP-Adresse beinhalten, die der Endgerätvorrichtung (102) zugewiesen ist.

3. Verfahren gemäß Anspruch 1 oder Anspruch 2, das weiterhin das Verschieben einer Internet-Protokoll- bzw. IP-Adresse zwischen der Drahtlos-Kommunikationsvorrichtung (104) und der Endgerätvorrichtung (102) aufweist, wobei das Verschieben der IP-Adresse folgende Schritte aufweist:
Blockieren in der Drahtlos-Kommunikationsvorrichtung (104), von gesendeten IP-Paketen, die von der Endgerätvorrichtung (102) abstammen; und
Hervorbringen von IP-Paketen von der Drahtlos-Kommunikationsvorrichtung (104), wobei die IP-Pakete als eine Herkunftsadresse eine IP-Adresse zugewiesen zu der Endgerätvorrichtung (102) aufweisen.

4. Verfahren nach einem der vorhergehenden Ansprüche, wobei das Verfahren weiterhin folgenden Schritt aufweist:
Bestimmen in der Drahtlos-Kommunikationsvorrichtung (104), ob eine Anwendung der Drahtlos-Kommunikationsvorrichtung (104) ein Bedarf besitzt IP-Pakete zu senden oder zu empfangen.

5. Verfahren nach einem der vorhergehenden Ansprüche, das weiterhin folgenden Schritt aufweist:
Verwerfen, in der Drahtlos-Kommunikationsvorrichtung (104) von empfangenen IP-Paketen adressiert zu der Endgerätvorrichtung (102).

6. Eine Drahtlos-Telekommunikationsvorrichtung (104), die Folgendes aufweist:
Mittel angepasst zum Untersuchen einer Port- bzw. Anschlusszahl eines empfangenen IP-Pakets;
Mittel angepasst zum Routen bzw. Lenken des IP-Pakets an eine Anwendung der Drahtlos-Telekommunikationsvorrichtung (104), wenn die Port-Zahl des empfangenen IP-Pakets zu der Anwendung entspricht; und
Mittel angepasst zum Lenken des IP-Pakets zu einer Endgerätvorrichtung (102), wenn die Port-Zahl des empfangenen IP-Pakets nicht zu der Anwendung entspricht.

7. Drahtlos-Telekommunikationsvorrichtung (104) nach Anspruch 6, die weiterhin Folgendes aufweist:
Mittel angepasst zum Hervorbringen von IP-Paketen von der Drahtlos-Telekommunikationsvorrichtung (104), wobei die IP-Pakete als eine Herkunftsadresse, eine IP-Adresse zugewiesen zu der Endgerätvorrichtung (102) aufweisen.

8. Eine Drahtlos-Telekommunikationsvorrichtung (104) nach Anspruch 6 oder 7, die weiterhin Folgendes aufweist:
Mittel angepasst zum Blockieren von gesendeten IP-Paketen, die von der Endgerätvorrichtung (102) herrühren;
Mittel angepasst zum Hervorbringen von IP-Paketen von der Drahtlos-Kommunikationsvorrichtung (104), wobei die IP-Pakete als eine Herkunftsadresse eine IP-Adresse zugewiesen zu der Endgerätvorrichtung (102) aufweist.

9. Drahtlos-Kommunikationsvorrichtung (104) nach einem der Ansprüche 6 bis 8 die weiterhin Folgendes aufweist:
Mittel angepasst zum Bestimmen, ob eine Anwendung der Drahtlos-Kommunikationsvorrichtung (104) ein Bedarf zum Hervorbringen von IP-Paketen besitzt.

10. Drahtlos-Kommunikationsvorrichtung (104) nach einem der Ansprüche 6 bis 9, die weiterhin Folgendes aufweist:
Mittel angepasst zum Verwerfen in der Drahtlos-Telekommunikationsvorrichtung (104), von empfangenen IP-Paketen, die an die Endgerätvorrichtung (102) adressiert sind.

## Revendications

1. Procédé de partage d'une adresse de protocole Internet, IP, entre un dispositif de communication sans fil (104) et un dispositif terminal (102), ce procédé comprenant les étapes suivantes :
examiner dans le dispositif de communication sans fil (104) un numéro d'accès d'un paquet IP reçu ;
acheminer, dans le dispositif de communication sans fil (104), le paquet IP vers une application sur le dispositif de communication sans fil (104) si le numéro d'accès du paquet IP reçu correspond à l'application ; et
acheminer à partir du dispositif de communication sans fil (104) le paquet IP vers le dispositif terminal (102) si le numéro d'accès du paquet IP reçu ne correspond pas à l'application.

2. Procédé selon la revendication 1, comprenant en outre l'étape consistant à faire provenir des paquets IP du dispositif de communication sans fil (104), les paquets IP comprenant comme adresse d'origine une adresse IP affectée au dispositif terminal (102).

3. Procédé selon la revendication 1 ou 2, comprenant en outre un décalage d'une adresse de protocole Internet, IP, entre le dispositif de communication sans fil (104) et le dispositif terminal (102), dans lequel le décalage de l'adresse IP comprend les étapes suivantes :
bloquer dans le dispositif de communication sans fil (104) des paquets IP émis provenant du dispositif terminal (102) ; et
faire provenir les paquets IP du dispositif de communication sans fil (104), les paquets IP incluant comme adresse d'origine une adresse IP affectée au dispositif terminal (102).

4. Procédé selon l'une quelconque des revendications précédentes, comprenant en outre l'étape consistant à déterminer dans le dispositif de communication sans fil (104) si une application sur le dispositif de communication sans fil (104) a besoin d'envoyer ou de recevoir des paquets IP.

5. Procédé selon l'une quelconque des revendications précédentes, comprenant en outre l'étape consistant à négliger dans le dispositif de communication sans fil (104) des paquets IP reçus adressés au dispositif terminal (102).

6. Dispositif de communication sans fil (104) comprenant :
des moyens adaptés à examiner un numéro d'accès d'un paquet IP reçu ;
des moyens adaptés à acheminer le paquet IP vers une application sur le dispositif de communication sans fil (104) si le numéro d'accès du paquet IP reçu correspond à l'application ; et
des moyens adaptés à acheminer le paquet IP vers le dispositif terminal (102) si le numéro d'accès du paquet IP reçu ne correspond pas à l'application.

7. Dispositif de communication sans fil (104) selon la revendication 6, comprenant en outre des moyens adaptés à faire provenir des paquets IP du dispositif de communication sans fil (104), les paquets IP comprenant comme adresse d'origine une adresse IP affectée au dispositif terminal (102).

8. Dispositif de communication sans fil (104) selon la revendication 6 ou 7, comprenant en outre :
des moyens adaptés à bloquer des paquets IP émis provenant du dispositif terminal (102) ; et
des moyens adaptés à faire provenir les paquets IP du dispositif de communication sans fil (104), les paquets IP incluant comme adresse d'origine une adresse IP affectée au dispositif terminal (102).

9. Dispositif de communication sans fil (104) selon l'une quelconque des revendications 6 à 8, comprenant en outre des moyens adaptés à déterminer si une application sur le dispositif de communication sans fil (104) a besoin d'envoyer des paquets IP.

10. Dispositif de communication sans fil (104) selon l'une quelconque des revendications 6 à 9, comprenant en outre des moyens adaptés à négliger dans le dispositif de communication sans fil (104) des paquets IP reçus adressés au dispositif terminal (102).
